(19) Europäisches Patentamt
European Patent Office
Office européen des brevets

(11) Veröffentlichungsnummer : **0 024 702**
**B1**

(12) **EUROPÄISCHE PATENTSCHRIFT**

(45) Veröffentlichungstag der Patentschrift : **16.02.83**

(51) Int. Cl.³ : **C 09 B 35/22**, D 06 P 1/18, C 08 K 5/23, D 21 H 1/46

(21) Anmeldenummer : **80104999.0**

(22) Anmeldetag : **22.08.80**

# (54) Disazoverbindungen, Verfahren zu ihrer Herstellung und ihre Verwendung als Farbmittel.

(30) Priorität : **04.09.79 DE 2935638**

(43) Veröffentlichungstag der Anmeldung : **11.03.81 Patentblatt 81/10**

(45) Bekanntmachung des Hinweises auf die Patenterteilung : **16.02.83 Patentblatt 83/07**

(84) Benannte Vertragsstaaten : **BE CH DE FR GB IT LI NL**

(56) Entgegenhaltungen : **DE A 2 658 396**

(73) Patentinhaber : **HOECHST AKTIENGESELLSCHAFT**
**Postfach 80 03 20**
**D-6230 Frankfurt/Main 80 (DE)**

(72) Erfinder : **Kühne, Rudolf, Dr.**
**Oestricher Weg 27**
**D-6000 Frankfurt am Main 71 (DE)**
Erfinder : **Hamal, Heinrich**
**Am Kalkofen 39**
**D-6237 Liederbach (DE)**

**EP 0 024 702 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Disazoverbindungen, Verfahren zu ihrer Herstellung und ihre Verwendung als Farbmittel

Die vorliegende Erfindung betrifft neue, wertvolle symmetrische und asymmetrische Disazoverbindungen, die sich von Glykolphenoläthern ableiten, sowie deren Gemische, ein Verfahren zu ihrer Herstellung und ihre Verwendung als Farbmittel.

Aus der DE-C 47 301 sind bereits Disazofarbstoffe bekannt, deren Diazokomponente der 1,2-Bis-(p-aminophenyl)-äthylenglykoläther ist. Die aus dieser Bis-diazokomponente mit üblichen, zu Pigmenten führenden Kupplungskomponenten, beispielsweise Acetoacetylaminobenzol, erhaltenen Disazoverbindungen haben sehr schlechte Lichtechtheiten und eine sehr geringe Farbstärke.

Aus der DE-A 24 34 432 sind analoge Disazoverbindungen bekannt, deren Kupplungskomponente Barbitursäure oder ein Derivat der Barbitursäure ist. Die so erhaltenen Disazoverbindungen sind ebenfalls hinsichtlich der Lichtechtheit und der Farbstärke unbefriedigend.

Aus der DE-C 26 58 396 sind weiterhin Disazopigmente bekannt, die durch Kupplung von Nitrogruppen enthaltenden, bisdiazotierten Bis-(amino-phenoxy)-alkanen auf Acetoacetylaminobenzole und 1-Arylpyrazolone-(5) hergestellt werden. Gegenüber diesen Disazoverbindungen zeichnen sich die erfindungsgemäßen Disazoverbindungen durch eine wesentlich erhöhte Lichtechtheit, verbesserte Überlackierungsechtheit in Lacken, verbesserte Migrationsechtheit in Kunststoffen und durch erhöhte thermische Stabilität aus.

Gegenstand der Erfindung sind neue symmetrische und asymmetrische Disazoverbindungen der allgemeinen Formel 1

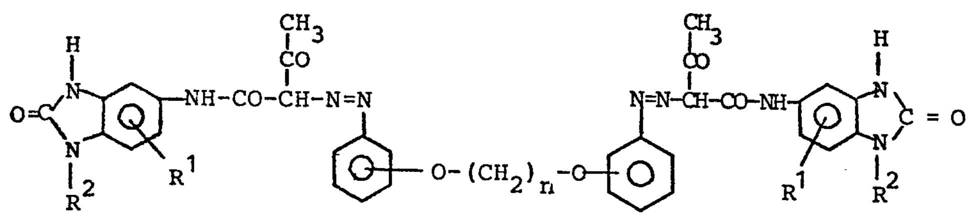

(1)

und deren Gemische, worin die Reste $R^1$ gleich oder verschieden sein können und Wasserstoff-, Chlor- oder Bromatome, Methyl- oder Methoxygruppen bedeuten, die Reste $R^2$, die ebenfalls gleich oder verschieden sein können, entweder Wasserstoffatome sind, oder wenn die dem gleichen Ringsystem zugehörigen Substituenten $R^1$ Wasserstoffatome sind, auch Methyl- oder Äthylgruppen sein können, und n eine Zahl von 1-4 ist, und insbesondere die Disazoverbindung der allgemeinen Formel 1, worin $R^1$ und $R^2$ Wasserstoffatome sind, die Äthersauerstoffatome in 2-Stellung zu den Azogruppen stehen und n gleich 2 ist.

Gegenstand der Erfindung ist weiterhin ein Verfahren zur Herstellung der vorstehend genannten Disazoverbindungen und deren Gemischen, das dadurch gekennzeichnet ist, daß man 1 Mol eines symmetrischen Diamins der allgemeinen Formel 2

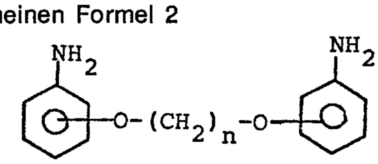

(2)

worin n eine Zahl von 1-4, vorzugsweise 2 bedeutet, bisdiazotiert und das erhaltene Bisdiazoniumsalz auf 2 Mol einer oder mehrerer Kupplungskomponenten der allgemeinen Formel 3

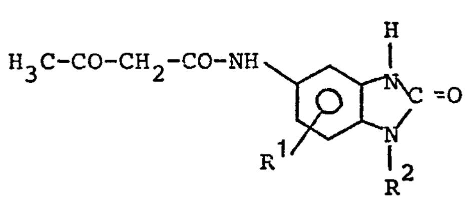

(3)

worin $R^1$ und $R^2$ die oben angegebene Bedeutung haben, in einem wäßrigen oder organischen Medium einwirken läßt.

Die Erfindung betrifft weiterhin die Verwendung der Dis-azoverbindungen der allgemeinen Formel 1 und deren Gemische als Farbmittel, insbesondere zum Pigmentieren von hochmolekularem organischem Material.

Die als Diazokomponenten geeigneten symmetrischen Diamine sind literaturbekannt und können beispielsweise durch Umsetzung von 2 Mol eines Alkalisalzes eines Nitrophenols mit 1 Mol eines

Dihalogenalkans, beispielsweise Dibromalkan, insbesondere Dibrom-methan, 1,2-Dibrom-äthan, 1,2-Dibrom-propan oder 1,4-Dibrom-butan, zu den entsprechenden Bis-(nitro-phenoxy)-alkanen und anschließende Reduktion der Nitrogruppen zu Aminogruppen, hergestellt werden. Die entsprechenden Bis-(2-nitro-phenoxy)-alkane und Bis-(4-nitro-phenoxy)-alkane mit n größer als 1 werden weiterhin durch Umsetzung von 2-Nitro-chlorbenzol oder 4-Nitrochlorbenzol mit dem betreffenden Glykol in einem vorzugsweise aprotischen Lösemittel, wie beispielsweise Dimethylformamid, Dimethylsulfoxid oder N-Methylpyrrolidon, in Gegenwart eines geeigneten basischen Kondensationsmittels erhalten. Die Diamine sind weiterhin durch Umsetzung der Acylamino-phenole, insbesondere der Acetamino-phenole, mit Dihalogenalkanen zu Bis-(acylamino-phenoxy)-alkanen und nachfolgender Abspaltung der Acylgruppen zugänglich.

Geeignete symmetrische Diamine sind vorzugsweise das technisch gut zugängliche

1,2-Bis-(2-amino-phenoxy)äthan, sowie
Bis-(2-amino-phenoxy)-methan,
Bis-(3-amino-phenoxy)-methan,
Bis-(4-amino-phenoxy)-methan,
1,2-Bis-(3-amino-phenoxy)-äthan,
1,2-Bis-(4-amino-phenoxy)-äthan,
1,3-Bis-(2-amino-phenoxy)-propan,
1,3-Bis-(3-amino-phenoxy)-propan,
1,3-Bis-(4-amino-phenoxy)-propan,
1,4-Bis-(2-amino-phenoxy)-butan,
1,4-Bis-(3-amino-phenoxy)-butan und
1,4-Bis-(4-amino-phenoxy)-butan.

Die Bisdiazotierung der symmetrischen Diamine der allgemeinen Formel 2 erfolgt vorzugsweise mit Alkalinitriten und einer Mineralsäure in Wasser, wobei es zweckmäßig sein kann, oberflächenaktive Stoffe im Sinne von nichtionogenen, kationischen oder anionischen Netz-, Dispergier- und Emulgiermitteln und/oder schwache bis mäßig starke organische oder anorganische Säuren, wie beispielsweise Ameisensäure, Essigsäure, Propionsäure oder Phosphorsäure, zuzusetzen. Die Bisdiazotierung kann weiterhin mit Nitrosylschwefelsäure oder in einem organischen Medium mit einem Alkylnitrit, beispielsweise mit n-Butylnitrit, ausgeführt werden.

Geeignete Kupplungskomponenten sind insbesondere das

5-Acetoacetylamino-benzimidazolon, sowie
6-Chlor-5-acetoacetylamino-benzimidazolon,
7-Chlor-5-acetoacetylamino-benzimidazolon,
6-Brom-5-acetoacetylamino-benzimidazolon,
6-Methyl-5-acetoacetylamino-benzimidazolon,
7-Methyl-5-acetoacetylamino-benzimidazolon,
6-Methoxy-5-acetoacetylamino-benzimidazolon,
7-Methoxy-5-acetoacetylamino-benzimidazolon,
1-Methyl-5-acetoacetylamino-benzimidazolon und
1-Äthyl-5-acetoacetylamino-benzimidazolon.

Anwendungstechnisch besonders interessante Pigmentgemische werden erhalten, wenn man das Bisdiazoniumsalz auf ein Gemisch von mehreren, vorzugsweise zwei verschiedenen Kupplungskomponenten einwirken läßt. In diesem Falle entstehen Gemische von symmetrischen und asymmetrischen Disazoverbindungen, im Falle von zwei Kupplungskomponenten werden zwei symmetrische und ein asymmetrischer Körper erhalten. Die entstandenen Pigmentgemische sind nicht ausschließlich als mechanische Mischungen zu verstehen, da sich die einzelnen Disazoverbindungen hinsichtlich der Pigmentreifung, beispielsweise bei der thermischen Nachbehandlung, gegenseitig im physikalischen Sinne beeinflussen. Dadurch ist die Möglichkeit gegeben, durch eine derartige gezielte Mischkupplung die anwendungstechnischen Eigenschaften im gewünschten Sinne zu verändern, beispielsweise die Nuance nach röter oder grüner zu verschieben oder die Transparenz oder die rheologischen Eigenschaften zu beeinflussen, wobei insbesondere kleine Zusatzmengen einer zweiten Kupplungskomponente besonders zweckmäßig sein können.

Die Herstellung der erfindungsgemäßen Disazoverbindungen und deren Gemischen erfolgt durch Kupplung nach an sich bekannten Verfahren, vorzugsweise durch Vereinigung der Bisdiazoniumsalze mit der Kupplungskomponente oder einem Gemisch der Kupplungskomponenten in wäßrigem Medium, wobei ein Zusatz der oben genannten grenzflächenaktiven Substanzen zweckmäßig sein kann. Desgleichen kann es in einigen Fällen günstig sein, die Kupplung in Gegenwart geeigneter organischer Lösemittel durchzuführen, zum Beispiel unter Zusatz von Alkoholen, wie niederen Alkanolen, Dioxan, Tetrahydrofuran, Formamid, Dimethylformamid, Dimethylsulfoxid, N-Methyl-pyrrolidon, Pyridin- oder Chinolinbasen. Es ist weiterhin möglich, die Kupplungskomponente in einem geeigneten organischen

Lösemittel zu Lösen und die wäßrige Bisdiazoniumsalzlösung, vorzugsweise in Gegenwart eines Puffers, beispielsweise Alkaliacetat, auf diese Lösung einwirken zu lassen. Hierbei kann es dann zweckmäßig sein, geeignete organische Basen, beispielsweise Pyridinbasen oder Alkylamine, als Protonenakzeptoren zuzusetzen. Vielfach ist es für die Kornbeschaffenheit und die Kristallstruktur der erhaltenen Disazoverbindungen und deren Gemischen vorteilhaft, im Anschluß an die Kupplung die Kupplungssuspension einer thermischen Nachbehandlung zu unterziehen, sie beispielsweise einige Zeit auf höhere Temperatur zu erhitzen, zu kochen oder unter Druck auf Temperaturen über dem Siedepunkt bei Normaldruck zu halten. Hierbei kann der Effekt der thermischen Nachbehandlung vielfach noch durch Zugabe geeigneter organischer Lösemittel, wie zum Beispiel von Alkanolen, Eisessig, Nitrobenzol, Halogenbenzolen, Halogennaphthalinen, Phthalsäuremono- und diestern, Pyridinbasen, Chinolinbasen, Dimethylformamid, Dimethylsulfoxid oder N-Methylpyrrolidon und/oder den Zusatz von grenzflächenaktiven Stoffen gesteigert werden.

Weiterhin kann es in einigen Fällen zweckmäßig sein, bereits die Kupplung bei erhöhter Temperatur, beispielsweise bei 40 bis 60 °C durchzuführen. Die erfindungsgemäßen Disazoverbindungen und deren Gemische können weiterhin in der Kupplungssuspension oder im Preßkuchen nach üblichen Verfahren verschnitten werden, beispielsweise mit Metallsalzen höherer Fettsäuren, mit Metallresinaten oder mit den freien gesättigten oder ungesättigten Fettsäuren selbst, desgleichen mit freien Harzsäuren, wie sie bei der Säurefällung von Alkaliresinaten erhalten werden oder mit Fettaminen und/oder deren Salzen. Außerdem ist die Einarbeitung von Mineralölen, Siliconölen, fetten Ölen, Fetten und Harzen in Substanz oder in emulgierter Form sowie die Einarbeitung geeigneter Kunstharzdispersionen und Dispersionen anderer hochmolekularer Körper möglich. Die Herstellung der erfindungsgemäßen Disazoverbindungen und deren Gemischen kann weiterhin in Gegenwart eines Trägermaterials, beispielsweise von Schwerspat, erfolgen.

Besonders reine und farbstarke Pigmente mit anwendungstechnisch wertvollen Eigenschaften werden erhalten, wenn die erfindungsgemäßen Disazoverbindungen und deren Gemische nach Abtrennen aus der Kupplungssuspension in Form der feuchten Preßkuchen oder auch als trockene Pulver einer thermischen Nachbehandlung mit organischen oder wäßrig-organischen Lösemitteln oder Lösemittelgemischen, gegebenenfalls unter Zusatz geeigneter grenzflächenaktiver Stoffe, unterzogen werden. Eine derartige Nachbehandlung, die insbesondere die kristallographischen Parameter beeinflußt, kann beispielsweise mit Alkoholen, insbesondere niederen Alkanolen, Eisessig, Pyridinbasen, Chinolinbasen, N-Methylpyrrolidon, Formamid, Dimethylformamid, Dimethylsulfoxid, Nitrobenzol, Halogenbenzolen und Halogennaphthalinen erfolgen. Es ist weiterhin möglich, die endgültige Kornbeschaffenheit der erhaltenen Pigmente durch trockene oder feuchte Vermahlung, gegebenenfalls unter Zusatz geeigneter Mahlhilfs- oder Verschnittmittel, zu beeinflussen.

Die erfindungsgemäßen Disazoverbindungen und deren Gemische sind wertvolle gelbe Farbmittel. Sie sind wasserunlöslich und unlöslich in den üblichen organischen Lösemitteln und eignen sich hervorragend zum Pigmentieren von hochmolekularem organischem Material. Sie zeigen hohe Farbstärke hohe Lichtechtheit und eine sehr gute thermische Stabilität. Sie eignen sich hervorragend zum Färben bzw. Bedrucken von Kunststoffen, natürlichen und synthetischen Harzen, Kautschuk, Papier, Viskose, Zellulose, Zelluloseestern, Zelluloseäthern, Polyvinylchlorid, Polyamiden, Polyolefinen, halogenierten Polyolefinen, Polystyrol, Polyurethanen, Polyacrylnitril, Polyglykolterephthalaten oder Mischpolymerisaten auf Basis Acrylnitril-Butadien-Styrol (ABS-Copolymere), sowie zur Herstellung von Druckfarben, Lackfarben und Dispersionsanstrichfarben und zum Pigmentieren von Druckpasten für den graphischen und textilen Druck sowie den Druck auf Kunststoff- und Metalloberflächen.

Die Pigmente lassen sich in den genannten Medien gut verarbeiten. Bedingt durch die hohe thermische Stabilität und gutes Dispergierverhalten eignen sich die erfindungsgemäßen Pigmente und deren Gemische vorzüglich für die Einarbeitung in extrudierbare Kunststoffe wie Polyolefine, insbesondere in Hoch- und Niederdruckpolyäthylen und Polypropylen. Sie eignen sich weiterhin vorzüglich zur Spinnfärbung von Polyolefinen, insbesondere von Polypropylen, wobei pigmentierte Filamente mit hoher Farbstärke, sehr guter Lichtechtheit und hervorragenden textilen Echtheiten wie Waschechtheit, Schweißechtheit, Reibechtheit, Lösemittelechtheit, Überfärbeechtheit und Thermofixierechtheit erhalten werden, die weiterhin farbstabil sind bei der Hypochloritbleiche und bei der Behandlung mit den üblichen Shampoonierungsmitteln. Gegenüber den nächstvergleichbaren Pigmenten der DE-C 26 58 396 weisen die erfindungsgemäßen Pigmente und deren Gemische eine wesentlich erhöhte Lichtechtheit, verbesserte Überlackierechtheit in Lacken, verbesserte Migrationsechtheit in Kunststoffen und erhöhte thermische Stabilität auf.

In den nachfolgenden Beispielen beziehen sich die Prozentangaben auf das Gewicht, sofern nichts anderes angegeben ist.

## Beispiel 1

24,4 g 1,2-Bis-(2-amino-phenoxy)-äthan werden mit 100 ml 5N-Salzsäure mehrere Stunden bei Raumtemperatur verrührt, im Eisbad abgekühlt und nach Zugabe von 65 g Eis auf übliche Weise durch Zutropfen von 41 ml 5N-Natriumnitritlösung diazotiert. Nach Klären der erhaltenen Bisdiazoniumsalzlösung mit Kieselgur und Aktivkohle wird überschüssiges Nitrit unmittelbar vor der Kupplung durch Zugabe

einer geringen Menge Amidosulfosäure zerstört.

46,6 g 5-Acetoacetylamino-benzimidazolon, 800 ml Wasser und 54 ml einer 33 %igen wäßrigen Natriumhydroxidlösung werden 30 Minuten bei Raumtemperatur verrührt, nach Zugabe von 3 g Kieselgur und 6 g Aktivkohle geklärt und das Filtrat mit Wasser auf 1000 ml aufgefüllt. Nach Zugabe von 250 g Eis und 0,5 g eines Kupplungshilfsmittels (Natriumsalz einer Alkylsulfamidoessigsäure, erhalten durch Halbsulfochlorierung einer Kohlenwasserstofffraktion mit den Siedegrenzen 230-250 °C und anschließender Umsetzung mit Aminoessigsäure), gelöst in etwa 10 ml Wasser, wird die Kupplungskomponente unter Verwendung eines Schnellrührers durch rasche Zugabe von 35 ml Eisessig in feinteiliger Form ausgefällt. Die Temperatur beträgt dabei 5-7 °C. Der pH-Wert wird auf 6,0 eingestellt.

Die Kupplung mit der vorstehend beschriebenen Bisdiazoniumsalzlösung erfolgt innerhalb von 2-3 Stunden bei einer Temperatur von 18-20 °C, wobei die Bisdiazoniumsalzlösung unter die Oberfläche der intensiv gerührten Kupplungssuspension einläuft und zwar derart, daß niemals überschüssiges Diazoniumsalz im Kupplungsgemisch nachweisbar ist. Während der Kupplung wird durch Zugabe kleiner Mengen von 2N-Natriumhydroxidlösung der pH-Wert konstant auf 6,0 gehalten.

Nach beendeter Kupplung wird durch Einleiten von Dampf die Temperatur der Kupplungssuspension innerhalb von 30 Minuten auf 90 °C erhöht, 30 Minuten bei 90-95 °C gehalten und dann durch Zugabe von Wasser auf ca. 70 °C abgekühlt. Bei dieser Temperatur wird abgesaugt und der Filterrückstand mit Wasser salzfrei gewaschen.

Der erhaltene Preßkuchen wird mit 1 700 ml Wasser zu einer homogenen Suspension verrührt und nach Zugabe einer 10 %igen wäßrigen Lösung von 0,7 g eines Anlagerungsprodukts von 25 Mol Äthylenoxid an 1 Mol Stearylalkohol in einem Rührautoklav 5 Stunden auf 150 °C erhitzt. Nach dem Erkalten wird das Pigment abgesaugt, mit etwas Wasser gewaschen und in einem Vakuumtrockenschrank bei 70 °C getrocknet. Nach dem Mahlen wird ein farbstarkes gelbes Pigmentpulver erhalten, das der nachfolgenden chemischen Konstitution entspricht.

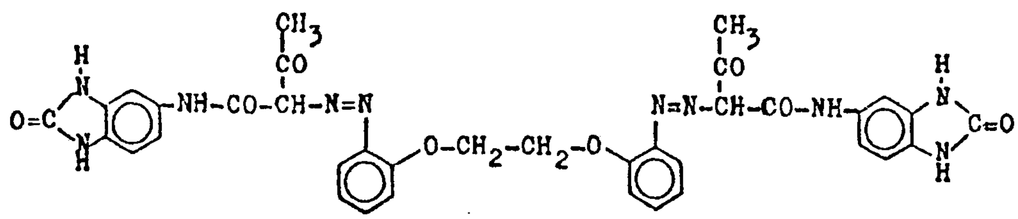

3,8 g des so erhaltenen Pigmentes und 62,5 ml Glaskugeln von 3 mm Durchmesser werden mit 27,4 g Alkydharz-Anreibelack, 25 %ig, in einem verschlossenen Plastikbecher von 125 ml Inhalt 60 Minuten auf dem « paint shaker » geschüttelt. Anschließend werden 44,8 g eines 56 %igen Alkydharz-Melaminharz-Klarlacks zugemischt und dann die Glaskugeln durch Absieben entfernt. Der so hergestellte 5 % Pigment enthaltende Vollton-Farblack wird mit der 1,25-fachen Gewichtsmenge eines Einbrennweißlackes vermischt, der ebenfalls auf Alkydharz-Melaminharz-Basis aufgebaut ist und als Weißpigment 20 % Titandioxid enthält. Der so erhaltene « aufgehellte » Lack wird mit Hilfe eines Filmziehgeräts (« hand coater ») auf Karton aufgezogen und nach dem Ablüften 30 Minuten bei 140 °C in einem Trockenschrank eingebrannt. Es wird eine Lackierung von hoher Farbstärke, sehr guter Lichtechtheit und sehr guter Stabilität gegenüber Chemikalien und insbesondere Lösemitteln erhalten.

Zur Prüfung der Überlackierechtheit wird der 5 %ig pigmentierte Vollton-Farblack mit dem Filmziehgerät auf Karton aufgezogen und wie üblich 30 Minuten bei 140 °C eingebrannt. Ein Teil der Färbung wird dann mit Weißlack abgedeckt und nochmals 30 Minuten bei 140 °C eingebrannt. Die Überlackierechtheit erweist sich als einwandfrei, d. h. die weiße Überlackierung zeigt keine Spur einer Anfärbung durch die darunterliegende Pigmentschicht. Das gleiche Ergebnis wird erhalten, wenn 30 Minuten bei 180 °C eingebrannt wird.

Beispiel 2

Es wird verfahren, wie in Beispiel 1 beschrieben, jedoch mit der Abänderung, daß die Nachbehandlung mit verdünntem Isobutanol erfolgt. Der salzfrei gewaschene Preßkuchen wird mit Wasser angeteigt und mit soviel Isobutanol versetzt, daß eine 4 %ige Suspension des Pigmentes in einem 50 %igem Isobutanol-Wasser-Gemisch erhalten wird. Dieses Gemisch wird in einem Rührautoklav innerhalb 1 Stunde auf 150 °C erhitzt und 3 Stunden bei dieser Temperatur gehalten. Nach dem Erkalten auf ca. 80 °C wird durch Einleiten von Wasserdampf das Isobutanol azeotrop abdestilliert. Die wäßrige Pigmentsuspension wird abgesaugt, mit etwas Wasser gewaschen und im Vakuumtrockenschrank bei 70 °C getrocknet. Es wird ein farbstarkes gelbes Pigmentpulver erhalten, das ähnliche Eigenschaften zeigt wie das gemäß Beispiel 1 hergestellte Pigment.

67 g Weich-Polyvinylchlorid, 33 g Dioctylphthalat, 0,1 g des erhaltenen Pigmentes und 0,5 g Titandioxid werden 5 Minuten lang auf einem Walzenstuhl gemischt und anschließend zu einer Folie verarbeitet. Die gelbe Färbung dieser Folie zeichnet sich durch eine hohe Farbstärke, reinen Farbton

sowie durch sehr gute Licht- und Migrationsechtheit aus.

Zur Prüfung der Migrationsechtheit wird die erhaltene Farbfolie beiderseits mit zwei Weißfolien eingedeckt und in engem Kontakt mit diesen 2 Stunden bei 140 °C gelagert. Nach dieser Zeit ist keine Spur einer farbigen Anschmutzung auf den Weißfolien erkennbar.

Zur Einfärbung von Polyäthylen wird 1,0 g des erhaltenen Pigmentes, 10 g eines Titandioxyd-Weißpigmentes vom Rutiltyp und 1 000 g eines Polyäthylengranulates hoher Dichte in einem Labor-Schüttelmischer 5 Minuten vorgemischt. Die so erhaltene Vormischung wird über einen Labor-Extruder plastifiziert, zu Strängen abgezogen und anschließend granuliert. Dieses Granulat wird auf einer Labor-Spritzgußmaschine zu 2,5 mm starken Spritzplatten verarbeitet. Es wurden gelbe Proben von hoher Farbstärke, hoher Farbreinheit, guter Lichtechtheit und ausgezeichneter thermischer Stabilität erhalten. Das verwendete Polyäthylen zeigt einen Schmelzindex MFI 190/5 (nach DIN 53 735) von 20-25 g/10 Minuten. Die Dichte beträgt 0,958 g/cm$^3$.

Zur Prüfung der thermischen Stabilität werden zwei Reihen von Spritzplatten hergestellt, bei denen zusätzlich zum Spritztakt eine Verweilzeit von 1 Minute und von 5 Minuten bei der jeweiligen Spritztemperatur eingehalten wird. Die Spritztemperaturen betragen dabei 200, 220, 240, 260, 280 und 300 °C. Anschließend werden die Spritzplatten farbmetrisch auf aufgetretene Farbänderungen untersucht, wobei die farbmetrische Messung nach DIN 5 033 und die Berechnung der Farbabstände nach DIN 6 174 erfolgt. Die mit dem erfindungsgemäß hergestellten Pigment erhaltenen Spritzlinge zeigen eine hervorragende thermische Stabilität. Bezogen auf die zulässige Farbtoleranz von $\Delta E^*_{ab} = 3$ wird bei einer Verweilzeit von 1 Minute eine Temperaturbeständigkeit von 300 °C und bei einer Verweilzeit von 5 Minuten eine von 290 °C festgestellt.

Bei der Prüfung in Polypropylen werden ähnlich gute Eigenschaften festgestellt.

Zur Massefärbung einer Polystyrol-Spritzgußmasse werden 1,0 g des erhaltenen Pigments, 10 g eines Titandioxid-Weißpigments vom Rutiltyp und 1 000 g Polystyrol-Homopolymerisat (glasklar, Pulver) in einem Labor-Schnellmischer 1 1/2 Minuten bei Raumtemperatur und einer Drehzahl von 3 600 U/min. vorgemischt. Die weitere Verarbeitung und die Prüfung auf thermische Stabilität erfolgen wie oben bei der Einfärbung von Polyäthylen beschrieben. Es werden gelbe Spritzlinge von hoher Farbstärke, hoher Farbreinheit, guter Lichtechtheit und vorzüglicher thermischer Stabilität erhalten. Bezogen auf die zulässige Farbtoleranz von $\Delta E^*_{ab} = 3$ wird bei einer Verweilzeit von 1 Minute und von 5 Minuten eine Temperaturbeständigkeit von 300 °C festgestellt.

Wird das erhaltene Pigment wie beschrieben in ein Mischpolymerisat aus Acrylnitril — Styrol — Butadien (ABS-Copolymeres) eingearbeitet, so werden gelbe Spritzlinge von hoher Farbstärke, guter Lichtechtheit und guter thermischer Stabilität erhalten. Bezogen auf die zulässige Farbtoleranz von $\Delta E^*_{ab} = 3$ wird bei einer Verweilzeit von 1 Minute eine Temperaturbeständigkeit von 290 °C und bei einer Verweilzeit von 5 Minuten eine von 270 °C festgestellt.

Zur Herstellung einer pigmentierten Blasfolie auf Basis Polyäthylen wird wie folgt verfahren :

2 200 Teile des erhaltenen Pigmentes werden in einem kühlbaren Schaufelkneter vorgelegt und bei laufendem Kneter mit 3 300 Teilen auf 140 °C erhitztem Polyäthylenwachs vom Schmelzbereich 80-90 °C vermischt und durch einstündiges Kneten homogenisiert. Die so erhaltene, 40 % Pigment enthaltende Präparation wird nach dem Erkalten zu einem Granulat zerkleinert. Dieses Granulat wird in den Einfülltrichter einer Dosiervorrichtung eingetragen, wo es in einer Menge von 2,5 %, bezogen auf das folienbildende Polymere, in die Eingangszone der Extruderschnecke einer Blasfolienanlage geführt wird, die mit Polyäthylen vom Schmelzindex MFI 190/2,16 (nach DIN 53 735) von 2-3 g/10 Minuten und einer Dichte von 0,923 g/cm$^3$ gespeist wird. Es werden homogen gefärbte gelbe Folien von hoher Farbstärke, hoher Farbreinheit und sehr guter Lichtechtheit erhalten.

Zur Einarbeitung des erfindungsgemäßen Pigmentes in eine Spinnmasse auf Basis Polypropylen und Herstellung pigmentierter Filamente wird wie folgt verfahren :

2 200 g Pigment werden in einem 20 Liter fassenden, kühlbaren Schaufelkneter vorgelegt und bei laufendem Kneter mit 3 300 g auf 140 °C erhitztem Polyäthylenwachs vom Schmelzbereich 80-90 °C vermischt und anschließend durch einstündiges Kneten homogenisiert. Die so erhaltene hochpigmentierte Präparation wird nach dem Erkalten zu einem Granulat zerkleinert. Dieses Granulat wird in den Einfülltrichter einer Dosierbandwaage eingebracht, wo es in einer Menge von 2,5 %, bezogen auf das faserbildende Polymere, in die Eingangszone einer Doppelschneckenpresse geführt wird, die mit einem isotaktischen Polypropylen vom Schmelzindex MFI 230/2,16 (nach DIN 53 735) von 10-12 g/10 Minuten und einer Dichte von 0,92 g/cm$^3$ gespeist wird. Am Ende der Presse wird die pigmentierte Polymerschmelze mittels einer Zahnradpumpe bei 270 °C durch eine Lochplatte gedrückt, die 24 Bohrungen mit einer lichten Weite von 150 µm aufweist, mit einer Geschwindigkeit von 1 250 m/Minute über zwei Galetten abgezogen und auf zylindrische Spulen aufgewickelt. Nach dem Recken des Spinnfadens erhält man ein Filamentgarn von 72 dtex, bestehend aus 24 Einzelfilamenten mit einer Reißlänge von 47 Rkm (Reißkilometer) und einer Reißdehnung von 27 %, das sich durch einen neutralen gelben Farbton von hoher Reinheit, hoher Farbstärke, sehr guter Lichtechtheit und hervorragende textile Echtheiten auszeichnet. Dabei wurde die Waschechtheit nach DIN 54 010, die alkalische und saure Schweißechtheit nach DIN 54 020, die trockene und nasse Reibechtheit nach DIN 54 021, die Lösemittelechtheit nach DIN 54 023, die Hypochloritbleiche nach DIN 54 034, die Überfärbechtheit im essigsauren Bade nach DIN 54 049 und die Thermofixierechtheit nach DIN 54 060 (30 Sekunden 150 °C) bestimmt. Darüber hinaus

wurde einwandfreie Shampoonierechtheit festgestellt.

Beispiel 3

Es wird verfahren wie in Beispiel 1 beschrieben, jedoch mit der Abänderung, daß als Diazokomponente 23,0 g Bis-(2-amino-phenoxy)-methan eingesetzt werden. Im Anschluß an die Kupplung wird zunächst durch Einleiten von Dampf die Kupplungssuspension auf 90 °C erhitzt und 2 Stunden bei 90-95 °C gehalten. Durch Zugabe von Wasser wird auf ca. 70 °C abgekühlt, abgesaugt und mit Wasser salzfrei gewaschen. Der erhaltene feuchte Preßkuchen wird mit Wasser angeteigt und mit soviel Isobutanol versetzt, daß eine Suspension mit 4 % Feststoffgehalt in einem 50 %igen Isobutanol-Wasser-Gemisch resultiert. In einem Rührautoklav wird dieses Gemisch innerhalb 1 Stunde auf 150 °C erhitzt und anschließend 5 Stunden bei dieser Temperatur gehalten. Nach dem Abkühlen auf etwa 90 °C wird durch Einblasen von Wasserdampf das Isobutanol azeotrop abdestilliert. Die erhaltene wäßrige Pigmentsuspension wird abgesaugt und in einem Vakuumtrockenschrank bei 70 °C getrocknet. Nach dem Mahlen wird ein kornweiches, farbstarkes, gelbes Pigmentpulver erhalten, das ähnliche coloristische Eigenschaften aufweist wie das gemäß Beispiel 1 hergestellte Pigment.

Beispiel 4

Es wird verfahren wie in Beispiel 1 beschrieben, jedoch mit der Abänderung, daß als Diazokomponente 25,8 g 1,3-Bis-(2-amino-phenoxy)-propan und als Kupplungshilfsmittel 1,0 g Dodecyl-dimethylbenzyl-ammonium-chlorid eingesetzt werden. Kupplung und thermische Nachbehandlung der Kupplungssuspension erfolgen wie in Beispiel 1 beschrieben. Der salzfrei gewaschene Preßkuchen wird mit Wasser angeteigt und mit soviel Isopropanol versetzt, daß eine Suspension mit 4 % Feststoffanteil in einem 50 %igem Isopropanol-Wasser-Gemisch resultiert. Das Gemisch wird in einem Rührautoklav auf 120 °C erhitzt und 5 Stunden bei dieser Temperatur gehalten. Nach dem Abkühlen wird abgesaugt, zunächst mit etwas 50 %igem Isopropanol und danach mit Wasser gewaschen und in einem Vakuumtrockenschrank bei 70 °C getrocknet. Nach dem Mahlen wird ein farbstarkes gelbes Pigmentpulver erhalten, das ähnliche coloristische Eigenschaften aufweist wie das gemäß Beispiel 1 hergestellte Pigment.

Beispiel 5

Es wird verfahren wie in Beispiel 1 beschrieben, jedoch mit der Abänderung, daß als Diazokomponente 27,2 g 1,4-Bis-(2-amino-phenoxy)-butan und als Kupplungshilfsmittel 1,0 g eines Kondensationsproduktes aus Oleylchlorid und N-Methyltaurin eingesetzt werden. Kupplung und thermische Nachbehandlung der Kupplungssuspension erfolgen wie in Beispiel 1 angegeben. Der salzfrei gewaschene feuchte Preßkuchen wird mit Wasser angeteigt und mit soviel Isopropanol versetzt, daß eine Suspension mit 3 % Feststoffanteil in einem 40 %igen Isopropanol-Wasser-Gemisch entsteht. Das Gemisch wird in einem Rührautoklav innerhalb 1 Stunde auf 150 °C erhitzt und 3 Stunden bei dieser Temperatur gehalten. Nach dem Abkühlen wird abgesaugt, zunächst mit 40 %igem Isopropanol und anschließend mit Wasser gewaschen und in einem Vakuumtrockenschrank bei 70 °C getrocknet. Nach dem Mahlen wird ein farbstarkes gelbes Pigmentpulver erhalten, das ähnliche coloristische Eigenschaften aufweist wie das nach Beispiel 1 hergestellte Pigment.

15 g des Pigmentes werden auf einem Dreiwalzenstuhl in 4 Passagen in 85 g eines handelsüblichen Buchdruckfirnis eingearbeitet, der folgende Zusammensetzung hat:

40 % Phenolharz, mit Kolophonium modifiziert,
20 % Lackleinöl und
40 % Mineralöl vom Siedebereich 280-310 °C.

Mit der erhaltenen gelben Buchdruckfarbe, die gute rheologische Eigenschaften aufweist und sich leicht drucken läßt, werden mit einem Probedruckgerät auf weißem Kunstdruckpapier Drucke mit einer Farbauflage von 1 g/m$^2$ hergestellt. Es werden sehr farbstarke, grünstichig-gelbe Drucke von hoher Farbreinheit, gutem Oberflächenglanz und guter Lichtechtheit erhalten. Sie zeigen sehr gute Beständigkeit gegen Sprit, Lacklösemittel (bestehend aus 50 % Äthylacetat, 40 % Toluol und 10 % n-Butanol), Alkalien und Säuren und keine Ausbluterscheinungen gegenüber einem Seifengel und gegenüber Butter.

Beispiel 6

53,52 g 7-Chlor-5-acetoacetylamino-benzimidazolon werden in 600 ml Wasser und 60,6 g einer 33 %igen wäßrigen Natriumhydroxidlösung kalt gelöst und nach Zusatz von je 2 g Kieselgur und Aktivkohle geklärt. Das Volumen des Filtrats wird auf 800 ml und die Temperatur auf 15 °C eingestellt.

Nach Zusatz von 100 ml einer 10 %igen wäßrigen Lösung eines Kupplungshilfsmittels, bestehend aus dem Natriumsalz des Kondensationsproduktes von 1 Mol Ölsäure mit 1 Mol N-Methylaminoessigsäure, wird durch Zugabe von 83 g 33 %iger Natriumhydroxidlösung stark alkalisch gestellt und anschließend die Kupplungskomponente unter Rühren mit einem Schnellrührer mit 71,6 g 85 %iger Phosphorsäure gefällt. Der pH-Wert der erhaltenen feinteiligen Suspension der Kupplungskomponente wird auf 6,9 und die Temperatur auf 40 °C eingestellt.

Die Kupplung mit einer gemäß Beispiel 1 hergestellten Bisdiazoniumsalzlösung erfolgt bei 40 °C im Verlauf von etwa 2 Stunden. Im Anschluß an die Kupplung wird durch Einleiten vom Dampf auf 90 °C erhitzt und 2 Stunden bei dieser Temperatur gehalten. Durch Zugabe von Wasser wird auf 70 °C abgekühlt, das Kupplungsprodukt bei dieser Temperatur abgesaugt und mit Wasser salzfrei gewaschen. Der erhaltene Preßkuchen wird mit Wasser angeteigt und mit soviel Isobutanol versetzt, daß eine 4 %ige Suspension des Pigmentes in 50 %igem Isobutanol erhalten wird. Dieses Gemisch wird in einem Rührautoklav 5 Stunden auf 150 °C erhitzt. Nach dem Erkalten auf ca. 90 °C wird durch Einleiten von Wasserdampf das Isobutanol azeotrop abdestilliert. Die erhaltene wäßrige Pigmentsuspension wird abgesaugt, mit wenig Wasser gewaschen und in einem Vakuumtrockenschrank bei 70 °C getrocknet. Es wird ein farbstarkes gelbes Pigmentpulver erhalten, das ähnlichgute anwendungstechnische Eigenschaften aufweist wie das gemäß Beispiel 1 hergestellt Pigment, im Farbton aber bedeutend grünstichiger ist.

## Beispiel 7

Es wird verfahren wie in Beispiel 1 beschrieben, jedoch mit der Abänderung, daß als Diazokomponente 23,0 g Bis-(4-amino-phenoxy)-methan eingesetzt werden. Kupplung und Nachbehandlung der Kupplungssuspension erfolgen gemäß Beispiel 1. Der so erhaltene Preßkuchen enthält ein bräunlichgelbes kristallographisch instabiles Pigment. Zur Umwandlung in die stabile Modifikation wird der feuchte Preßkuchen mit Wasser angerührt und mit soviel Isobutanol versetzt, daß eine Suspension mit 4 % Feststoffanteil in einem 50 %igen Isobutanol-Wasser-Gemisch entsteht. Dieses Gemisch wird in einem Rührautoklav 5 Stunden auf 150 °C erhitzt. Nach dem Abkühlen auf ca. 90 °C wird durch Einleiten von Wasserdampf das Isobutanol azeotrop abdestilliert. Nach Absaugen, Trocknen und Mahlen wird ein farbstarkes orangefarbenes Pigmentpulver erhalten. Wird das erhaltene Pigment wie in Beispiel 1 beschrieben in einem Einbrennlack eingearbeitet, so werden orange Färbungen von hoher Farbstärke, sehr guter Lichtechtheit, sehr guter Stabilität gegenüber Chemikalien und insbesondere Lösemittel und ausgezeichneter Überlackierechtheit erhalten.

## Beispiel 8

23,3 g 5-Acetoacetylamino-benzimidazolon und 26,8 g 7-Chlor-5-acetoactylamino-benzimidazolon werden in 600 ml Dimethylsulfoxid gelöst und mit 30 ml einer wäßrigen 4N-Natriumacetatlösung versezt. Die Kupplung mit einer gemäß Beispiel 1 aus 24,4 g 1,2 Bis-(2-amino-phenoxy)-äthan hergestellten Bisdiazoniumsalzlösung erfolgt bei 18-20 °C im Verlauf von etwa 1 Stunde, wobei durch einen zweiten Tropftrichter allmählich noch 120 ml 4N-Natrium-acetatlösung zur Kupplungssuspension zugegeben werden. Nach beendigter Kupplung wird mit dem gleichen Volumen Methanol verdünnt, zum Sieden erhitzt und 8 Stunden unter Rückflußkühlung gekocht. Es wird heiß abgesaugt und zunächst mit heißem Methanol und anschließend mit heißem Wasser gewaschen. Nach dem Trocknen und Mahlen wird ein farbstarkes, grünstichig-gelbes Pigmenpulver erhalten. Dieses Pigmentgemisch besteht zu je etwa 25 Mol-% aus den beiden symmetrischen und zu etwa 50 Mol-% aus der asymmetrischen Disazoverbindung.

Nach Einarbeitung des erhaltenen Pigmentgemisches in einen Einbrennlack, wie dies in Beispiel 1 beschrieben ist, werden farbstarke Lackierungen von sehr guter Lichtechtheit und ausgezeichneter Überlackierechtheit erhalten.

## Beispiel 9

Es wird verfahren wie in Beispiel 1 beschrieben, jedoch mit der Abänderung, daß als Kupplungskomponente ein Gemisch aus 41,9 g 5-Acetoacetylamino-benzimidazolon und 5,35 g 7-Chlor-5-acetoacetylamino-benzimidazolon eingesetzt wird. Die beiden Kupplungskomponenten stehen dabei im Verhältnis von 90 : 10 Mol-%. Die Nachbehandlung des Preßkuchens erfolgt gemäß Beispiel 2. Wird das erhaltene Pigmentgemisch wie in Beispiel 1 angegeben ist, in einen Einbrennlack eingearbeitet, so werden Lackierungen erhalten, die deutlich farbstärker, grünstichiger und transparenter sind als die mit dem nach Beispiel 1 hergestellten Pigment erhaltenen Lackierungen.

Ein ähnliches Ergebnis wird erhalten, wenn das 7-Chlor-5-acetoacetylamino-benzimidazolon durch 5,35 g 6-Chlor-5-acetoacetyl-amino-benzimidazolon ersetzt wird.

Beispiel 10

Es wird verfahren wie in Beispiel 1 beschrieben, jedoch mit der Abänderung, daß als Kupplungskomponente 39,6 g 5-Acetoacetylamino-benzimidazolon und 7,4 g 7-Methyl-5-acetoacetylamino-benzimidazolon zum Einsatz kommen. Die beiden Kupplungskomponenten stehen dabei im Verhältnis von 85 : 15 Mol-%. Die Nachbehandlung des Preßkuchens erfolgt gemäßt Beispiel 2, wobei jedoch die Temperatur 10 Stunden auf 150 °C gehalten wird. Das erhaltene Pigmentgemisch wird, wie in Beispiel 1 beschrieben ist, in einen Einbrennlack eingearbeitet. Es werden farbstarke Lackierungen erhalten, die im Farbton deutlich rotstichiger sind als die mit dem gemäß Beispiel 1 hergestellten Pigment erhältlichen Lackierung.

Ähnliche Ergebnisse werden erhalten, wenn an Stelle von 7-Methyl-5-acetoacetylamino-benzimidazolon 7,4 g 6-Methyl-5-acetoacetylamino-benzimidazolon 7,4 g 6-Methyl-5-acetoacetylamino-benzimidazolon oder 7,9 g 6-Methoxy-5-acetoacetylamino-benzimidazolon zum Einsatz kommen.

Beispiel 11

5,35 g 6-Chlor-5-acetoacetylamino-benzimidazolon werden in 90 ml Dimethylformamid gelöst und mit 3,0 ml einer wäßrigen 4N-Natriumacetatlösung versetzt. Die Bisdiazoniumsalzlösung wird gemäß Beispiel 1 aus 2,44 g 1,2-Bis-(2-amino-phenoxy)-äthan hergestellt. Die Kupplung erfolgt bei 18-20 °C im Verlauf von etwa 1 Stunde, wobei die Bisdiazoniumsalzlösung unter die Oberfläche der intensiv gerührten Lösung der Kupplungskomponente einläuft. Gleichzeitig werden durch einen zweiten Tropftrichter allmählich 12,0 ml 4N-Natriumacetatlösung zugegeben. Nach beendigter Kupplung wird 30 Minuten bei 18-20 °C nachgerührt, mit dem gleichen Volumen Methanol versetzt, 30 Minuten bei Raumtemperatur gerührt, abgesaugt und zunächst mit Methanol und anschließend mit Wasser gewaschen. Nach dem Trocknen in einem Vakuumtrockenschrank bei 70 °C wird ein kornweiches, grünstichiggelbes farbstarkes Pigmentpulver erhalten.

In den folgenden Tabellen sind weitere Pigmente beschrieben, die analog zu Beispiel 11 durch Kupplung der bisdiazotierten Diamine der Spalte I auf die Acetoacetyl-amino-benzimidazolone der Spalte II erhalten werden. In Spalte III ist der Farbton angegeben, der erhalten wird, wenn aus dem Pigment eine 5 %ig pigmentierte, mit Titandioxid im Verhältnis 1 : 5 aufgehellte Einbrennlackierung hergestellt wird.

| Beispiel | I | II | III |
|---|---|---|---|
| 12 | Bis-(2-amino-phenoxy)-methan | 6-Chlor-5-acetoacetylamino-benzimidazolon | grünstichig-gelb |
| 13 | Bis-(2-amino-phenoxy)-methan | 7-Chlor-5-acetoacetylamino-benzimidazolon | gelb |
| 14 | Bis-(2-amino-phenoxy)-methan | 6-Methyl-5-acetoacetylamino-benzimidazolon | rotstichig-gelb |
| 15 | Bis-(2-amino-phenoxy)-methan | 7-Methyl-5-acetoacetylamino-benzimidazolon | rotstichig-gelb |
| 16 | Bis-(2-amino-phenoxy)-methan | 6-Methoxy-5-acetoacetylamino-benzimidazolon | rotstichig-gelb |
| 17 | Bis-(3-amino-phenoxy)-methan | 5-Acetoacetylamino-benzimidazolon | gelb |
| 18 | 1,2-Bis-(2-amino-phenoxy)-äthan | 6-Brom-5-actoacetylamino-benzimidazolon | grünstichig-gelb |
| 19 | 1,2-Bis-(2-amino-phenoxy)-äthan | 6-Methyl-5-acetoacetylamino-benzimidazolon | rotstichig-gelb |
| 20 | 1,2-Bis-(2-amino-phenoxy)-äthan | 7-Methyl-5-acetoacetylamino-benzimidazolon | rotstichig-gelb |
| 21 | 1,2-Bis-(2-amino-phenoxy)-äthan | 6-Methoxy-5-acetoacetylamino-benzimidazolon | rotstichig-gelb |
| 22 | 1,2-Bis-(2-amino-phenoxy)-äthan | 7-Methoxy-5-acetoacetylamino-benzimidazolon | rotstichig-gelb |
| 23 | 1,2-Bis-(2-amino-phenoxy)-äthan | 5-Acetoacetylamino-N1-methyl-benzimidazolon | grünstichig-gelb |
| 24 | 1,2-Bis-(2-amino-phenoxy)-äthan | 5-Acetoacetylamino-N1-äthyl-benzimidazolon | grünstichig-gelb |
| 25 | 1,2-Bis-(3-amino-phenoxy)-äthan | 7-Chlor-5-acetoacetylamino-benzimidazolon | grünstichig-gelb |
| 26 | 1,2-Bis-(4-amino-phenoxy)-äthan | 7-Chlor-5-acetoacetylamino-benzimidazolon | grünstichig-gelb |

| Beispiel | I | II | III |
|---|---|---|---|
| 27 | 1,2-Bis-(4-amino-phenoxy)-äthan | 6-Methyl-5-acetoacetylamino-benzimidazolon | rotstichig-gelb |
| 28 | 1,3-Bis-(2-amino-phenoxy)-propan | 6-Chor-5-acetoacetylamino-benzimidazolon | gelb |
| 29 | 1,3-Bis-(2-amino-phenoxy)-propan | 7-Chlor-5-acetoacetylamino-benzimidazolon | grünstichig-gelb |
| 30 | 1,3-Bis-(3-amino-phenoxy)-propan | 5-Acetoacetylamino-benzimidazolon | gelb |
| 31 | 1,3-Bis-(4-amino-phenoxy)-propan | 7-Methyl-5-acetoacetylamino-benzimidazolon | rotstichig-gelb |
| 32 | 1,3-Bis-(4-amino-phenoxy)-propan | 6-Methoxy-5-acetoacetylamino-benzimidazolon | rotstichig-gelb |
| 33 | 1,4-Bis-(2-amino-phenoxy)-butan | 7-Chlor-5-acetoacetylamino-benzimidazolon | grünstichig-gelb |
| 34 | 1,4-Bis-(2-amino-phenoxy)-butan | 7-Methyl-5-acetoacetylamino-benzimidazolon | rotstichig-gelb |
| 35 | 1,4-Bis-(2-amino-phenoxy)-butan | 6-Methoxy-5-acetoacetylamino-benzimidazolon | rotstichig-gelb |
| 36 | 1,4-Bis-(3-amino-phenoxy)-butan | 5-Acetoacetylaminobenzimidazolon | gelb |
| 37 | 1,4-Bis-(4-amino-phenoxy)-butan | 7-Chlor-5-acetoacetylamino-benzimidazolon | grünstichig-gelb |
| 38 | 1,4-Bis-(4-amino-phenoxy)-butan | 7-Methyl-5-acetoacetylamino-benzimidazolon | rotstichig-gelb |
| 39 | 1,4-Bis-(4-amino-phenoxy)-butan | 6-Methoxy-5-acetoacetylamino-benzimidazolon | rotstichig-gelb |

**Ansprüche**

1. Symmetrische und asymmetrische Disazoverbindungen der allgemeinen Formel (1)

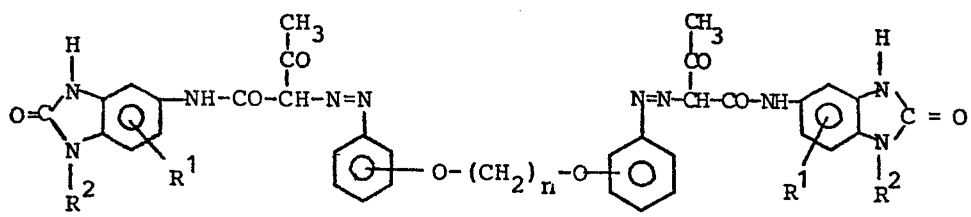

(1)

und deren Gemische, worin die Reste $R^1$ gleich oder verschieden sein können und Wasserstoff-, Chlor- oder Bromatome, Methyl- oder Methoxygruppen bedeuten, die Reste $R^2$, die ebenfalls gleich oder verschieden sein können, entweder Wasserstoffatome sind, oder wenn die dem gleichen Ringsystem zugehörigen Substituenten $R^1$ Wasserstoffatome sind, auch Methyl- oder Äthylgruppen sein können, und n eine Zahl von 1-4 ist.

2. Verbindung nach Anspruch 1, dadurch gekennzeichnet, daß $R^1$ und $R^2$ Wasserstoffatome sind, n 2 ist und die Äthersauerstoffatome in 2-Stellung zu den Azogruppen stehen.

3. Verfahren zur Herstellung der Verbindungen gemäß Anspruch 1 und deren Gemischen, dadurch gekennzeichnet, daß man 1 Mol eines symmetrischen Diamins der allgemeinen Formel (2)

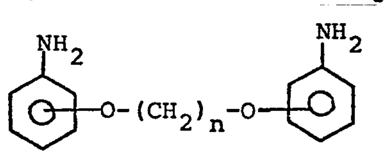

(2)

,worin n eine Zahl von 1-4 ist, bisdiazotiert und das erhaltene Bisdiazoniumsalz auf 2 Mol einer oder mehrerer Kupplungskomponenten der allgemeinen Formel (3),

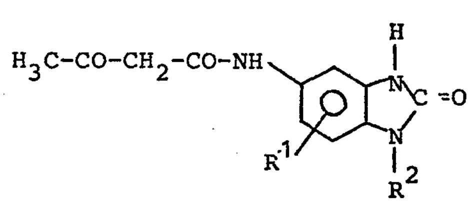

(3)

worin $R^1$ und $R^2$ die in Anspruch 1 beschrieben Bedeutung haben, in einem wäßrigen oder organischen Medium einwirken laßt.

4. Verwendung der Disazoverbindungen gemäß Anspruch 1 und von deren Gemischen als Farbmittel.

5. Verwendung der Disazoverbindungen gemäß Anspruch 1 und von deren Gemischen als Pigmente.

6. Verwendung der Disazoverbindungen gemäß Anspruch 1 und von deren Gemischen zum Pigmentieren von Kunststoffen, natürlichen und synthetischen Harzen, Kautschuk, Papier, Viskose, Zellulose, Zelluloseestern, Zelluloseäthern, Polyvinylchlorid, Polyamiden, Polyolefinen, halogenierten Polyolefinen Polystyrol, Polyurethanen, Polyacrylnitril, Polyglykolterephthalaten oder Mischpolymerisaten auf Basis Acrylnitril-Butadien-Styrol, sowie zur Herstellung von Druckfarben, Lackfarben oder Dispersionsanstrichfarben.

7. Verwendung der Disazoverbindungen gemäß Anspruch 1 und von deren Gemischen zum Pigmentieren extrudierbarer Kunststoffe.

8. Verwendung der Disazoverbindungen gemäß Anspruch 1 und von deren Gemischen zur Spinnfärbung von Polyolefinen.

9. Verwendung der Disazoverbindungen gemäß Anspruch 1 und von deren Gemischen zur Spinnfärbung von Polypropylen.

10. Verwendung der Disazoverbindungen gemäß Anspruch 1 und von deren Gemischen zum Pigmentieren von Polyvinylchlorid, Polyvinylchlorid enthaltende Mischpolymerisaten und Polyvinylchlorid enthaltenden Polymerengemischen.

**Claims**

1. Symmetrical and asymmetrical disazo compounds of the general formula 1

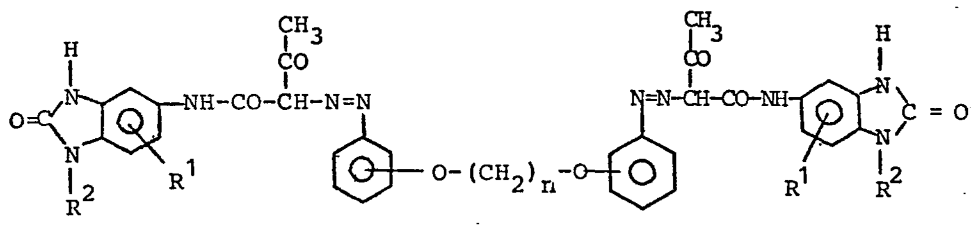

(1)

and mixtures thereof, in which the radicals $R^1$ can be identical of different and denote hydrogen, chlorine or bromine atoms of methyl or methoxy groups, each radical $R^2$ is a hydrogen atom or, if the substituent $R^1$ belonging to the same ring system is a hydrogen atom, may also be a methyl or ethyl group, the two $R^2$s being identical or different, and n is a number from 1 to 4.

2. Compound as claimed in claim 1, wherein $R^1$ and $R^2$ are hydrogen atoms, n is 2 and the ether oxygen atoms are in the 2-position relative to the azo groups.

3. Process for the preparation of the compounds as claimed in claim 1, and mixtures thereof, which comprises bis-diazotizing 1 mole of a symmetrical diamine of the general formula 2

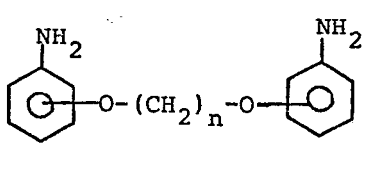

(2)

in which n is a number from 1 to 4, and allowing the resulting bis-diazonium salt to act on 2 moles of one or more coupling components of the general formula 3

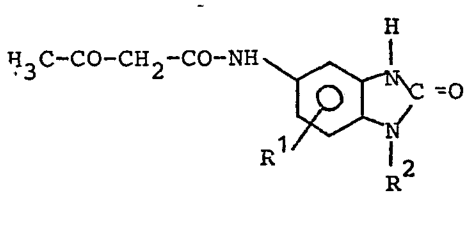

(3)

in which $R^1$ and $R^2$ are as defined in claim 1, in an aqueous or organic medium.

4. Use of the disazo compounds as claimed in claim 1, and of the mixtures thereof, as colorants.

5. Use of the disazo compounds as claimed in claim 1, and of the mixtures thereof, as pigments.

6. Use of the disazo compounds as claimed in claim 1, and of the mixtures thereof, for pigmenting plastics, natural and synthetic resins, rubber, paper, viscose, cellulose, cellulose esters, cellulose ethers, polyvinyl chloride, polyamides, polyolefins, halogenated polyolefins, polystyrene, polyurethanes, polyacrylonitrile, polyglycol terephthalates or copolymers based on acrylonitrile/butadiene/styrene and also for the preparation of printing inks, colored lacquers of emulsion paints.

7. Use of the disazo compounds as claimed in claim 1, and of the mixtures thereof, for pigmenting extrudable plastics.

8. Use of the disazo compounds as claimed in claim 1, and of the mixtures thereof, for the spin-dyeing of polyolefins.

9. Use of the disazo compounds as claimed in claim 1, and of the mixtures thereof, for the spin-dyeing of polypropylene.

10. Use of the disazo compounds as claimed in claim 1, and of the mixtures thereof, for pigmenting polyvinyl chloride, copolymers containing polyvinyl chloride and polymer mixtures containing polyvinyl chloride.

**Revendications**

1. Composés bisazoïques symétriques et asymétriques de la formule générale (1) :

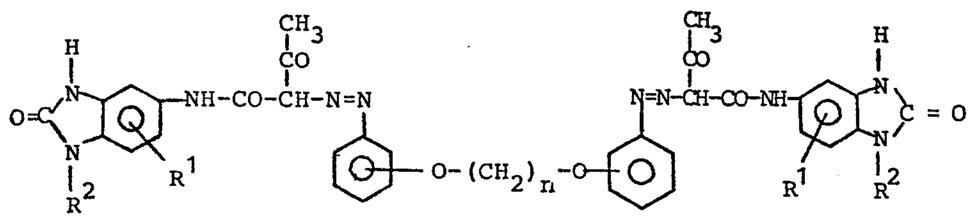

(1)

dans laquelle les radicaux $R^1$ peuvent être identiques ou différents et ils représentent des atomes d'hydrogène, de chlore ou de brome ou des groupes méthyles ou méthoxy ; les radicaux $R^2$, qui peuvent être également identiques ou différents, sont des atomes d'hydrogène ou, lorsque les radicaux $R^1$ appartenant au même système cyclique sont des atomes d'hydrogène, $R^2$ peut également représenter des groupes méthyles ou éthyles ; et n est un nombre valant 1 à 4 et leurs mélanges.

2. Composé selon la revendication 1, caractérisé en ce que $R^1$ et $R^2$ sont des atomes d'hydrogène ; n vaut 2 ; et les atomes d'oxygène de fonction éther sont en position 2 par rapport aux groupes azoïques.

3. Procédé pour préparer les composés selon la revendication 1 et leurs mélanges, caractérisé en ce qu'on bis-diazote 1 mole d'une dizaine symétrique de formule générale (2) :

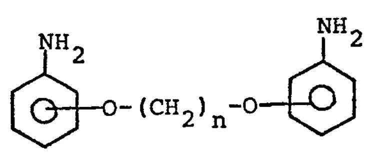

(2)

(dans laquelle n est un nombre valant 1 à 4) et l'on fait agir, dans un milieu aqueux ou organique, le sel de bis-diazonium obtenu sur 2 moles d'un ou plusieurs copulants de formule générale (3) :

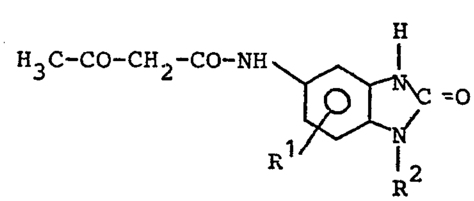

(3)

dans laquelle $R^1$ et $R^2$ ont le sens indiqué à la revendication 1.

4. Utilisation des composés bisazoïques selon la revendication 1 et de leurs mélanges comme colorants.

5. Utilisation des composés bisazoïques selon la revendication 1 et de leurs mélanges, comme pigments.

6. Utilisation des composés bisazoïques selon la revendication 1 et de leurs mélanges, pour

pigmenter des matières plastiques, des résines naturelles et synthétiques, du caoutchouc, du papier, de la viscose, de la cellulose, des esters de la cellulose, des éthers de la cellulose, du chlorure de polyvinyle, des polyamides, des polyoléfines, des polyoléfines halogénées, du polystyrène, des polyuréthannes, du polyacrylonitrile, des téréphtalates de polyglycols ou des copolymères à base d'acrylonitrile/butadiène/styrène, ainsi que pour produire des encres d'imprimerie, des peintures laquées ou des peintures émulsionnées.

7. Utilisation des composés bisazoïques selon la revendication 1, et de leurs mélanges, pour pigmenter des matières plastiques extrudables.

8. Utilisation des composés bisazoïques selon la revendication 1, et de leurs mélanges, pour la coloration en cours de filage des polyoléfines.

9. Utilisation des composés bisazoïques selon la revendication 1, et de leurs mélanges, pour la coloration en cours de filage du polypropylène.

10. Utilisation des composés bisazoïques selon la revendication 1, et de leurs mélanges, pour pigmenter du chlorure de polyvinyle, des copolymères contenant du chlorure de polyvinyle.